# EUROPÄISCHE PATENTSCHRIFT

(11) **EP 0 352 531 B1**
(45) Veröffentlichungstag und Bekanntmachung des Hinweises auf die Patenterteilung: **28.04.1993**
(21) Anmeldenummer: 89112511.4
(22) Anmeldetag: 08.07.1989
(51) Int. Cl.: H02K 15/06

(54) **Einziehnadel**
Pull-in needle
Aiguille à tirage

(30) Priorität: 23.07.1988 DE 3825064
(43) Veröffentlichungstag der Anmeldung: 31.01.1990
(73) Patentinhaber: STATOMAT SPEZIALMASCHINEN GMBH, D-61138 Niederdorfelden (DE)
(72) Erfinder: Leame, Filippo, D-6369 Schöneck 1 (DE)
(74) Vertreter: Jochem, Bernd, Dipl.-Wirtsch.-Ing.

(56) Entgegenhaltungen:
- DE-U- 8 521 173

## Beschreibung

Die Erfindung betrifft eine Einziehnadel, bestehend aus einem leistenförmigen Kern und damit verbundenen Blechlippen, zur Verwendung in einer Vorrichtung zum Einziehen von Spulen in Statoren elektrischer Maschinen, bei welcher mehrere Einziehnadeln, jeweils einzel auf einem Statorzahn längsverschieblich geführt, als Gruppe durch einen gemeinsamen Antrieb axial durch die Statorbohrung verfahrbar sind.

Eine derartige Einziehnadel ist im deutschen Gebrauchsmuster G 85 21 173.7 beschrieben. Ebenso wie andere bekannte Einziehnadeln, die aus einem Stück gearbeitet sind, eignet sie sich nur zum Einziehen von Spulen in Statoren mit geraden, achsparallelen Nuten.

Verdrallte Statoren, deren Nuten über ihre axiale Länge schraubenförmig gewendelt sind, haben in vielen Anwendungsfällen bessere elektrische Eigenschaften als Statoren mit achsparallelen Nuten. Bisher mußten jedoch die Spulen entweder von Hand in die gewendelten Nuten eingelegt werden, oder man hat hierzu gemäß DE-PS 26.58.891 paarweise verbundene, jeweils auch paarweise in einer einzigen Statornut geführte, biegsame Zungen benutzt. Die Biegsamkeit dieser Zungen gestattet zwar einerseits ihre elastische Verformung in Anpassung an eine gewendelte Statornut, andererseits ist gerade die Biegsamkeit die Ursache für entscheidende Nachteile dieser Zungen. Sie werden durch die zwischen ihnen aufgenommenen Spulen über die Länge ungleichmäßig verformt bzw. ausgebaucht, so daß sie durch starke Reibung an den scharfkantigen Statorblechen im Bereich der Ausbauchung sowie an den auseinanderfedernden Enden sehr schnell verschleißen. Außerdem verwinden sich die biegsamen Zungen in gewendelten Statornuten und können dadurch die gewünschte Führung und Anlage an den Kanten der Statorzähne verlieren.

Der Erfindung liegt daher die Aufgabe zugrunde, eine für das Einziehen von Spulen sowohl in achsparallele als auch in schraubenförmige Statornuten geeignete Einziehnadel zu schaffen, welche sich während des Einziehvorgangs in Eingriff mit den Statorzähnen gegenüber den von den Spulen ausgeübten Kräften im wesentlichen ebenso steif verhält, wie die bisher üblichen massiven, jeweils in zwei Statornuten eingreifenden, geraden Einziehnadeln, andererseits aber doch biegsam genug ist, um auch in gewendelte Statornuten eingeführt werden zu können.

Vorstehende Aufgabe wird erfindungsgemäß dadurch gelöst, daß der Kern der Einziehnadel aus mehreren axial nebeneinander angeordneten, relativ zueinander beweglichen Segmenten besteht.

Während bei den massiven, starren Einziehnadeln lediglich Kostenerwägungen dazu geführt haben, diese aus einem Kern aus unbearbeitetem oder teilweise bearbeitetem Rundstahl mit daran befestigten Blechlippen herzustellen, beruht die Erfindung auf der Erkenntnis, daß man Blechlippen und mehrere axial nebeneinander angeordnete Kernsegmente auch funktionell zusammenwirken lassen kann, um eine einerseits biegsame, andererseits beim Einziehvorgang in Umfangsrichtung des Statorblechpakets punktuell sehr steife Einziehnadel zu erhalten. In der Arbeitsstellung, in der die Einziehnadel den Kopf eines Statorzahns umklammert und mit ihren Blechlippen in die beiden angrenzenden Statornuten eingreift, spielt es nämlich für die Steifigkeit der Einziehnadel in Querrichtung keine Rolle, daß der Kern in einzelne Segmente unterteilt ist. Die von einem Spulenstrang auf eine in derartiger Weise im Kern segmentierte Einziehnadel ausgeübte seitliche Kraft führt daher nicht zum Ausbauchen der Einziehnadel, sondern wird wegen deren Steifigkeit über die gesamte am Statorzahn anliegende Länge an diesem abgestützt, so daßdie Flächenpressung und der Verschleiß verhältnismäßig gering sind. Es spielt in dieser Hinsicht auch keine Rolle, ob die neuen Einziehnadeln vor dem Einziehen der Spulen in die Statornut eingeführt werden und während des eigentlichen Einziehvorgans relativ zum Statorblechpaket feststehen, oder ob die Einziehnadeln gleichzeitig und zusammen mit den einzuziehenden Spulen durch die Statorbohrung bewegt werden. Beide genannten Einziehverfahren sind mit der neuen Einziehnadel möglich, und zwar sowohl bei verdrallten Statoren als auch solchen mit achsparallelen Nuten, obgleich man bei letzteren aus Kostengründen normalerweise einfacher aufgebaute Einziehnadeln vorziehen wird.

Ein weiterer besonderer Vorzug der erfindungsgemäßen Einziehnadel besteht darin, daß die Anpassung an unterschiedliche Längen sehr einfach ist. Normalerweise werden Statoren mit einem bestimmten Blechschnitt in mehreren unterschiedlichen Pakethöhen hergestellt. In allen Fällen kann man hierzu dieselben Segmente in großer Stückzahl vorfertigen und braucht dann für die verschieden langen Einziehnadeln lediglich eine unterschiedliche Anzahl maßlich übereinstimmender Segmente oder bloß zusätzlich jeweils ein in der Länge individuell angepaßtes Segment.

Ein aus mehreren Einziehnadeln bestehendes Einziehwerkzeug sollte nicht nur in Arbeitsstellung in Eingriff mit den Statorzähnen relativ steif sein, sondern auch außerhalb des Stators, um das Einführen der Spulen zwischen die Einziehnadeln und das Ausrichten auf die Statorzähne zu erleichtern. Zu diesem Zweck sind bei einer in der Praxis bevorzugten Ausführungsform der Erfindung die Segmente mittels eines wenigstens durch die mittleren Segmente hindurchgeführten Spannorgans unter Druck in gegenseitiger Anlage gehalten. Das Spannorgan , etwa eine mit Gewinde versehene Zugstange, kann z. B. durch Einschrauben in das hinterste Segment verankert sein und sich mit einer Mutter oder einem Schraubenkopf am vordersten Segment abstützen.

Es hat sich als eine für den Gebrauchszweck vorteilhafte, einfache Ausführung erwiesen, benachbarte Segmente über Radiallager miteinander zu verbinden. Dies können z. B. in Bohrungen der Segmente eingesetzte Lagerbuchsen aus Sintermetall oder einem anderen geeigneten Material sein. Alternativ kann auch jeweils ein Segment mit einem daran stirnseitig ausgebildeten Zapfen in eine passende Bohrung im benachbarten Segment eingreifen. Derartige Radiallager zwischen den Segmenten gestatten nicht nur Drehbewegungen, sondern wegen des Lagerspiels auch die notwendigen Kippbewegungen in dem geringen Ausmaß, welches wegen der in der Praxis vorkommenden Krümmungsradien der Statornuten erforderlich ist. Bessere Gelenke zwischen den Segmenten ergeben sich mit sphärischen Lagerflächen, aber solche Ausführungen sind auch entsprechend teurer. Andererseits kann in besonders einfacher Ausführungsform die Ausbildung von Gelenken zwischen den Segmenten entfallen, insbesondere dann, wenn sie z. B. auf einem stangenförmigen Spannorgan aufgefädelt sind, welches aber in besonders einfacher Ausführung ebenfalls entfallen kann, da die einzelnen Segmente über die mit ihnen z. B. durch Punktschweißen verbundenen Blechlippen auch untereinander verbunden sind. Die Anzahl der Segmente richtet sich in erster Linie nach der Krümmung der Statornuten, deren gewendelten Verlauf die Einziehnadeln folgen müssen.

Die Blechlippen können an einem einzigen um den Kern gebogenen Blech ausgebildet sein. Es können aber auch für die beiden Blechlippen getrennte Bleche verwendet und einzeln mit den Kernsegmenten z. B. durch Punktschweißen, Löten oder Kleben verbunden werden. Diese letztgenannte Ausführungsform bietet sich insbesondere dann an, wenn als Ausgangsmaterial für die Kernsegmente Rundstahl verwendet wird, welcher auf diametral gegenüberliegenden Seiten derart mit Abflachungen versehen ist, daß die Blechlippen mit ihrem daran anliegenden Teil sich radial mit Bezug auf die Mittellängsachse der Statorbohrung erstrecken. Damit sich in diesem Fall die vorzugsweise jeweils nur im mittleren Bereich der Segmente mit diesen verbundenen Bleche beim Verdrillen der Einziehnadel nicht stellenweise soweit von der anschließenden Mantelfläche der Segmente abheben, daß gegebenenfalls die Lackisolierung des Spulendrahts beschädigt wird, ist in weiterer bevorzugter Ausgestaltung der Erfindung vorgesehen, daß die Abflachungen der Segmente jeweils längs einer Seitenkante stufenförmig von der äußeren Mantelfläche abgesetzt sind, wobei die Stufen jeweils eine Längsseite der Bleche überdecken.

Zur Vermeidung von störenden Ausbauchungen oder Knicken der Blechlippen im verdrillten Zustand der Einziehnadel kann es darüberhinaus zweckmäßig sein, die Segmente an ihren aneinander grenzenden Enden in den am Blech der Blechlippen anliegenden Umfangsbereichen auf kleinere Querschnitte abzusetzen. Es fällt dabei praktisch nicht ins Gewicht, daß die Blechlippen auf den verhältnismäßig kurzen axialen Abständen im Bereich der Fugen zwischen den Segmenten nicht an diesen abgestützt sind.

Mehrere Ausführungsbeispiele der Erfindung werden nachstehend anhand der Zeichnung näher erläutert. Es zeigen:
- Fig. 1: eine Seitenansicht einer Einziehnadel;
- Fig. 2: eine um 90° gedrehte Seitenansicht, zum Teil im Schnitt, der Einziehnadel nach Fig. 1;
- Fig. 3: einen Querschnitt durch die Einziehnadel nach Fig. 1 und 2 mit zwei unterschiedlich ausgebildeten, wahlweise zu verwendenden Abflachungen des Kerns der Einziehnadel;
- Fig. 4-6: Seitenansichten und Querschnitt entsprechend Fig.1-3 eines weiteren Ausführungsbeispiels;
- Fig. 7: eine perspektivische Teilansicht mehrerer Einziehnadeln eines Einziehwerkzeugs in Anlage an den Statorzähnen eines verdrallten Statorblechpakets;
- Fig. 8: eine perspektivische Ansicht entsprechend Fig. 7 mehrerer Einziehnadeln mit einem durch eine Schraubenfeder gebildeten Kern.

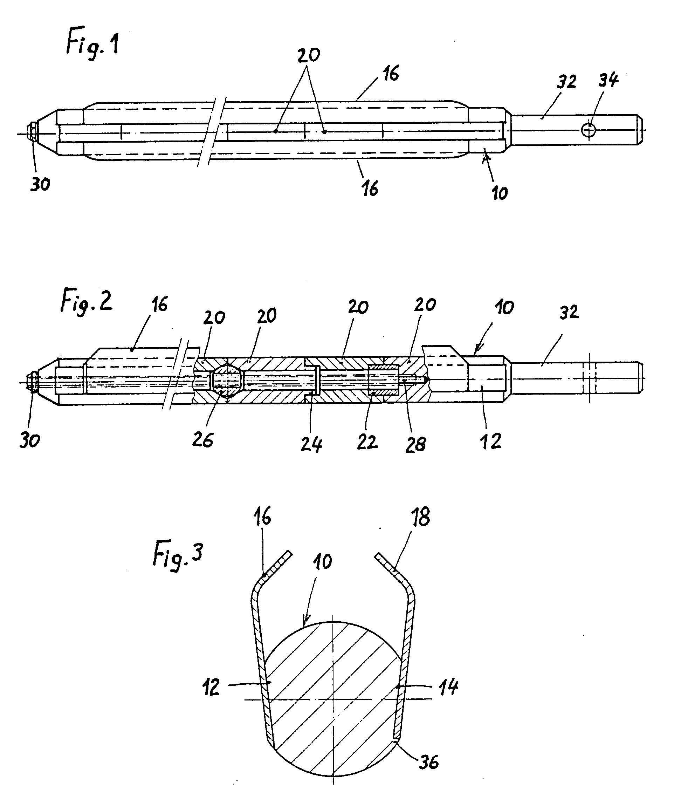

Die in Fig. 1-3 gezeigte Einziehnadel besteht ebenso wie die in der DE-GM 85 21 173.7 beschriebene Einziehnadel aus einem Kern 10 aus in diesem Fall abgeflachtem Rundmaterial und beidseitig an den Abflachungen 12 bzw. 14 angeschweißten oder angelöteten Blechlippen 16 bzw. 18. Der Unterschied zu den bekannten Einziehnadeln besteht darin, daß der Kern 10 in mehrere axial nebeneinander angeordnete Segmente 20 aufgeteilt ist, die relativ zueinander drehbar und auch begrenzt kippbar sind. Zu diesem Zweck zeigt Fig. 2 drei verschiedene Ausführungen von Lagern zwischen den einzelnen Segmenten. So kann z. B. jeweils eine Lagerbuchse 22 in eine fluchtende Bohrung in zwei aneinander angrenzenden Segmenten 20 eingesetzt sein. Alternativ kann auch jeweils das eine stirnseitige Ende eines Segments 20 mit einem vorspringenden Zapfen 24 ausgebildet sein, der in eine entsprechende Bohrung im angrenzenden Segment eingreift. Ein weiteres alternativ zur Anwendung kommendes Lager kann ein sogenanntes Universallager sein, bei welchem sich entweder etwa halbschalenförmige sphärische Lagerflächen der aneinander angrenzenden Segmente 20 an einer zwischen ihnen eingesetzten Kugel 26 abstützen oder ein halbkugelförmiger Vorsprung an dem einen Segment in eine passende Halbschale im anderen Segment gelagert ist. Darüber hinaus besteht die Möglichkeit, daß die Segmente 20 ohne exakte Führung durch ein Radiallager oder Kugelgelenk einfach nur flach aneinander anliegen und relativ zueinander eine Gleitbewegung ausführen, wenn die Einziehnadel verdrillt wird.

In axialer Richtung und zentraler Lage durch das vordere und alle mittleren Segmente 20 hindurch erstreckt sich als Spannorgan eine Stange 28, die mit ihrem mit Gewinde vesehenen hinteren Ende in eine passende Gewindebohrung im hintersten Segment 20 eingeschraubt ist und sich an ihrem ebenfalls mit Gewinde versehenen vorderen Ende über eine Mutter 30 an der äußeren Stirnfläche des vordersten Segments 20 abstützt. Durch Festziehen der Mutter 30 werden die Segmente 20 gegeneinandergedrückt, und es kann dadurch die Steifigkeit der Einziehnadel erhöht werden, ohne daß die gelenkige Biegsamkeit verlohren geht. Da auch die Stange 28 die Segmente 20 zusammenhält, müssen nicht unbedingt alle Segmente mit den Blechlippen 16 bzw. 18 verbunden sein. Ohnehin sind die Blechlippen 16 bzw. 18 vorzugsweise nicht über die gesamte Länge der Segmente 20 mit diesen verschweißt, verlötet, oder in anderer Weise verbunden, sondern nur an einzelnen Punkten bzw. in begrenzten Bereichen. In der Praxis genügen normalerweise auf jeder Seite ein bis drei Schweißpunkte etwa in der axialen Mitte des Segments, um dieses zuverlässig mit der auf dieser Seite angebrachten Blechlippe 16 bzw. 18 zu, verbinden.

Bei dem gezeigten Ausführungsbeispiel ist das hinterste Segment 20 einstückig mit einem Schaft 32 ausgebildet, der mit einer Querbohrung 34 versehen ist. Mit dem Schaft 32 kann die Einziehnadel mit zwei gegeneinander drehbaren, konzentrischen, axial hintereinander angeordneten Scheiben, Ringen oder Ringsegmenten in Eingriff gebracht werden, durch deren Relativdrehung eine gewünschte Schrägstellung der Einziehnadel mit Bezug auf die Drehachse erzeugt werden kann. Es besteht aber auch die Möglichkeit, die Einziehnadel ohne Schaft 32 herzustellen und unmittelbar am hintersten Segment 20 zu lagern, wie dies in der DE-GM 85 21 173 gezeigt ist. Je nach Anwendungsfall kann dabei eine geeignete Halterung gewählt werden, welche die Einziehnadel in der gewünschten, dem Drall des Statorblechpakets entsprechenden Schräglage hält. In diesem Fall kann die Stange 28 auch ganz durch das hinterste Segment 20 hindurchgeführt und z. B. ebenfalls mit einer Mutter, wie am vorderen Ende, auf der äußeren Stirnfläche des hintersten Segments abgestützt sein.

Bei der auf der linken Seite der Fig. 3 dargestellten Ausführungsform ist die Abflachung 12 des für den Kern 10 verwendeten Rundstahls nicht in das Material eingesenkt und die Hinterkante der Blechlippe 16 in Anpassung an die Umfangsfläche des Rundstahls abgeschliffen. Bei der in Fig. 3 rechts gezeigten Ausführungsform wird dagegen die Abflachung 14 an ihrem hinteren Ende durch eine Stufe 36 begrenzt, deren Höhe der Dicke der Blechlippe 18 entspricht. Dadurch wird deren Hinterkante überdeckt und damit die Gefahr von Beschädigungen des Spulendrahts an der Hinterkante der Blechlippe 18 verringert, selbst wenn sich die Hinterkante beim Verdrillen der Einziehnadel ein wenig von einem Segment 20 des Kerns 10 abhebt.

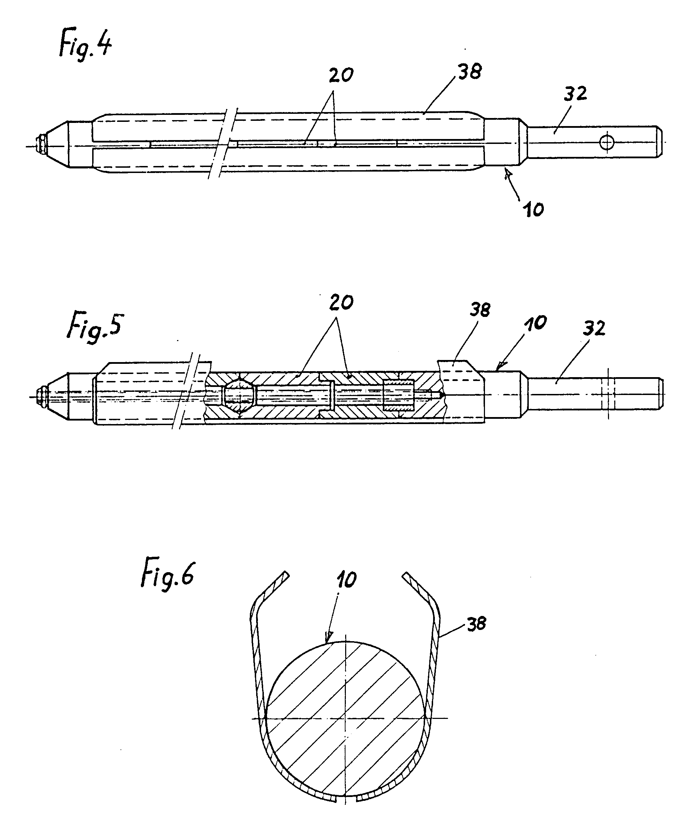

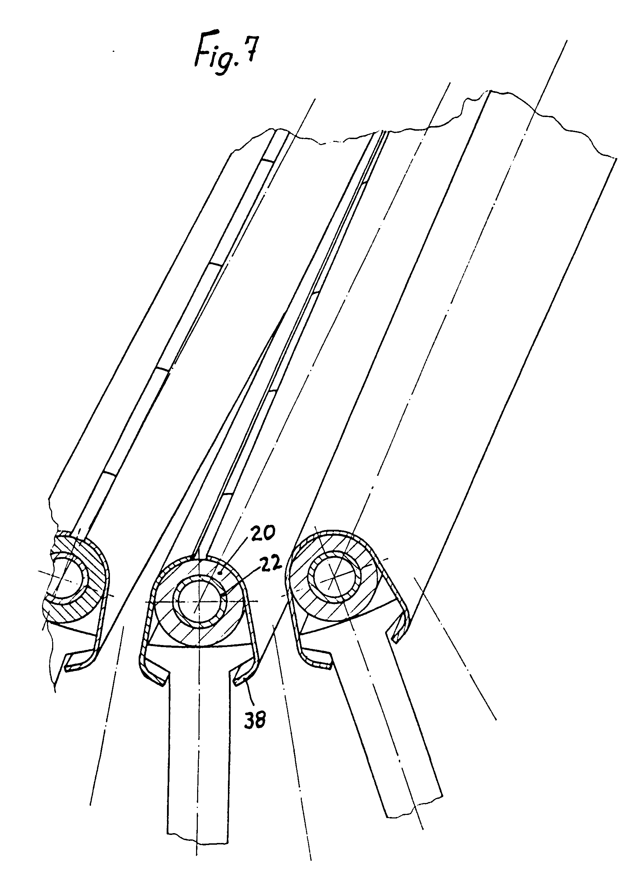

Die Ausführungsform nach Fig. 4-6 unterscheidet sich nur dadurch von der nach Fig. 1-3, daß die Segmente 20 einfach nur Abschnitte eines ansonsten auf der äußeren Mantelfläche unbearbeiteten Rundstahls sind. Dementsprechend sind auch die hier mit 38 bezeichneten beiden Blechlippen im Bereich ihrer Anlage an den Segmenten des Kerns 10 entsprechend dem Radius des Rundstahls gebogen. Es versteht sich, daß die beiden Blechlippen 38 auch einstückig aus einem einzigen Blechstreifen bestehen können, wie dies in Fig. 7 bei der rechten der drei gezeigten Einziehnadeln dargestellt ist.

Im übrigen läßt Fig. 7 insbesondere bei der linken und dermittleren Einziehnadel deren Krümmung und Verdrillung erkennen, wenn sie jeweils einen Statorzahn eines verdrallten Statorblechpakets abdecken.

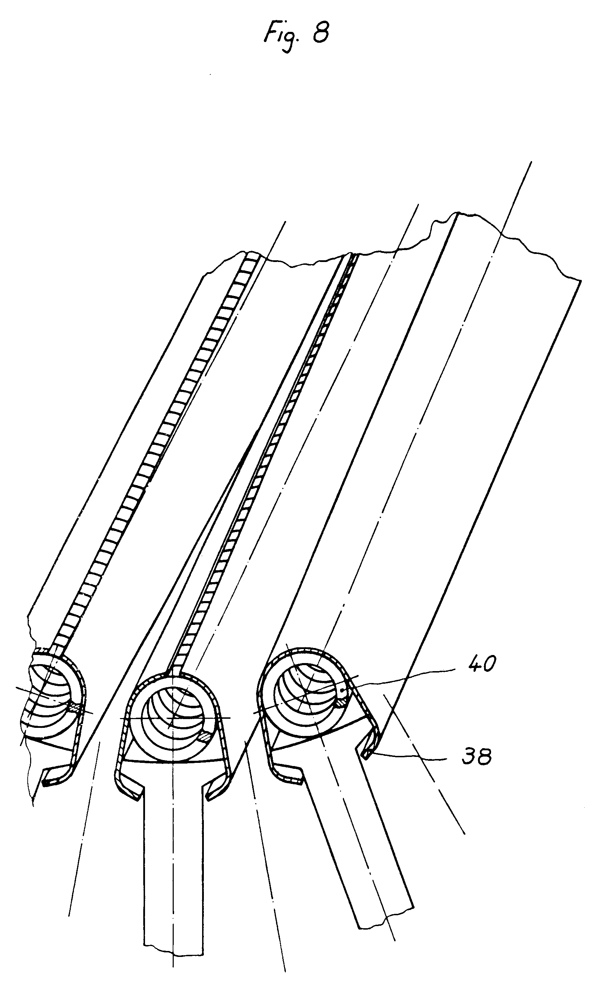

Schließlich ist in Fig. 8 ein Ausführungsbeispiel dargestellt, bei welchem jede Einziehnadel im Kern aus einer Schraubenfeder 40 besteht. Die beiden Blechlippen 38 sind auch in diesem Fall im Bereich ihrer Anlage an den Windungen der Schraubenfeder 40 entsprechend deren Außendurchmesser gebogen. Ebenso wäre auch ein einziger Blechstreifen, der die beiden Blechlippen 38 bildet, zu biegen. Eine Verbindung zwischen der Schraubenfeder 40 und den Blechlippen 38 besteht vorzugsweise nur an einzelnen Punkten. Insofern gilt das oben Gesagte analog. Darüber hinaus ist mit dem hinteren Ende der Schraubenfeder ein Schaft 32 und mit ihrem vorderen Ende ein Kopfteil fest verbunden, so daß die beiden Enden der Einziehlamelle mit denen der zuvor beschriebenen Ausführungsbeispiele übereinstimmen. Durch Formgebung der Schraubenfeder 40 kann diese auch einen äußeren Umriß wie der Kern 10 gemäß Fig. 3 haben, so daß die Blechlippen auf gegenüberliegenden ebenen Flächen mit der Schraubenfeder 40 verbunden werden können.

## Patentansprüche

1. Einziehnadel, bestehend aus einem leistenförmigen Kern (10) und damit verbundenen Blechlippen (16;18;38), zur Verwendung in einer Vorrichtung zum Einziehen von Spulen in Statoren elektrischer Maschinen,bei welcher mehrere Einziehnadeln, jeweils einzeln auf einem Statorzahn längsverschieblich geführt, als Gruppe durch einen gemeinsamen Antrieb axial durch die Statorbohrung verfahrbar sind, dadurch gekennzeichnet, daß der Kern (10) aus mehreren axial nebeneinander angeordneten, relativ zueinander beweglichen Segmenten (20) besteht.

2. Einziehnadel nach Anspruch 1, **dadurch gekennzeichnet**, daß benachbarte Segmente (20) über Radiallager (22,24) miteinander verbunden sind.

3. Einziehnadel nach Anspruch 1, **dadurch gekennzeichnet**, daß benachbarte Segmente (20) über sphärische Lagerflächen (Kugel 26) miteinander verbunden sind.

4. Einziehnadel nach einem der Ansprüche 1-3 **dadurch gekennzeichnet**, daß die Segmente (20) mittels eines wenigstens durch die mittleren Segmente hindurchgeführten Spannorgans (28) unter Druck in gegenseitiger Anlage gehalten sind.

5. Einziehnadel nach einem der Ansprüche 1-4 **dadurch gekennzeichnet**, daß die Segmente (20) wenigstens teilweise nur im mittleren axialen Bereich durch Schweißpunkte, Löt-oder Klebestellen mit den Blechlippen (16,18,38) verbunden sind.

6. Einziehnadel nach einem der Ansprüche 1-5, **dadurch gekennzeichnet**, daß die Segmente (20) aus Rundstahl mit nicht- oder nur teilweise bearbeiteter Mantelfläche bestehen.

7. Einziehnadel nach einem der Ansprüche 1-6, **dadurch gekennzeichnet**, daß die Segmente (20) an ihren aneinander grenzenden Enden in den am Blech der Blechlippen (16,18,38) anliegenden Umfangsbereichen auf kleinere Querschnitte verjüngt sind.

8. Einziehnadel nach einem der Ansprüche 1-7, **dadurch gekennzeichnet**, daß das hinterste Segment (20) mit einem Führungsschaft (32) ausgebildet ist, welcher mit zwei relativ zueinander verstellbaren Führungsteilen in Eingriff zu bringen ist.

9. Einziehnadel nach einem der Ansprüche 1-8, **dadurch gekennzeichnet**, daß die Segmente (20) auf im wesentlichen diametral gegenüberliegenden Seiten mit Abflachungen (14) versehen sind, an welchen je ein eine Blechlippe (18) bildendes Blech anliegt und welche jeweils längs einer Seitenkante stufenförmig (Stufe 36) von der äußeren Mantelfläche abgesetzt sind, wobei die Stufen (36) jeweils eine Längsseite der Bleche überdecken.

10. Einziehnadel nach Anspruch 1, **dadurch gekennzeichnet**, daß die relativ zu einander beweglichen Segmente Windungen einer Schraubenfeder (40) sind.

## Claims

1. A draw-in needle, comprising a strip-like core (10) and plate lips (16; 18; 38) connected therewith, for use in an apparatus for drawing coils into stators of electric machines, in which a plurality of draw-in needles, each of which is individually guided longitudinally displaceably on a stator tooth, can be moved as a group by a common drive axially through the stator bore, characterised in that the core (10) comprises a plurality of segments (20) disposed axially side by side and movable relative to one another.

2. A draw-in needle according to Claim 1, characterised in that adjoining segments (20) are connected with one another via radial bearings (22, 24).

3. A draw-in needle according to Claim 1, characterised in that adjoining segments (20) are joined to one another via spherical bearing surfaces (ball 26).

4. A draw-in needle according to any one of Claims 1 to 3, characterised in that the segments (20) are retained mutually abutting under pressure by means of a clamping member (28) guided at least through the central segments.

5. A draw-in needle according to any one of Claims 1 to 4, characterised in that the segments (20) are joined to the plate lips (16, 18, 38) at least partly only in the central axial region by welded points, soldered or bonded points.

6. A draw-in needle according to any one of Claims 1 to 5, characterised in that the segments (20) consist of round bar steel, the circumferential surface of which is not machined or only partly machined.

7. A draw-in needle according to any one of Claims 1 to 6, characterised in that at their mutually adjoining ends in the peripheral zones adjacent the plate of the plate lips (16, 18, 38) the segments (20) are reduced to relatively small cross-sections.

8. A draw-in needle according to any one of Claims 1 to 7, characterised in that the rearmost segment (20) is formed with a guide stem (32) which is to be brought into engagement with two guide parts which are adjustable relative to one another.

9. A draw-in needle according to any one of Claims 1 to 8, characterised in that the segments (20) are provided on substantially diametrically opposed sides with flattened portions (14) which are each adjoined by a respective plate forming a plate lip (18) and which are each offset from the outer circumferential surface along one side edge in stepped fashion (step 36), the steps (36) respectively overlapping one longitudinal side of the plates.

10. A draw-in needle according to Claim 1, characterised in that the segments, which are movable relative to one another, are coils of a helical spring (40).

## Revendications

1. Aiguille de tirage, constituée d'un noyau (10) en forme de baguette portant des lèvres en tôle (16, 18, 38), pour utilisation dans un dispositif de tirage des bobines à l'intérieur des stators de machines électriques, utilisant plusieurs aiguilles dont chacune coulisse sur une dent du stator et dont l'ensemble se déplace sous l'action d'un entraînement commun axialement à travers l'alésage du stator, caractérisée en ce que le noyau (10) de l'aiguille est constitué de plusieurs segments axiaux juxtaposés (20), mobiles les uns par rapport aux autres.

2. Aiguille de tirage selon la revendication 1, caractérisée en ce que des segments voisins (20) sont reliés par des paliers radiaux (22, 24).

3. Aiguille de tirage selon la revendication 1, caractérisée en ce que des segments voisins (20) sont reliés par des paliers à surface sphériques (billes 26).

4. Aiguille de tirage selon la revendication 1, caractérisée en ce que les segments (20) sont maintenus en appui l'un sur l'autre, avec pression, au moyen d'un organe de tension (28) traversant au moins les segments médians.

5. Aiguille de tirage selon une des revendications 1 à 4, caractérisée en ce que les segments (20) sont reliés aux lèvres en tôle (16, 18, 38) au moins en partie seulement dans la zone axiale médiane, par des points de soudure, des joints de brasure ou de colle.

6. Aiguille de tirage selon une des revendications 1 à 5, caractérisé en ce que les segments (20) sont constitués de barres rondes en acier avec une surface enveloppe brute ou usinée seulement partiellement.

7. Aiguille de tirage selon une des revendications 1 à 6, caractérisée en ce que les extrémités voisines de segments (20) présentent une réduction de section dans les zones de contact avec les lèvres en tôle (16, 18, 38).

8. Aiguille de tirage selon une des revendications 1 à 7, caractérisé en ce que le segment (20) le plus en arrière est constitué par une tige de guidage (32), qui peut être amenée en prise avec deux pièces de guidage mobiles relativement l'un par rapport à l'autre.

9. Aiguille de tirage selon une des revendications 1 à 8, caractérisé en ce que les segments (20) présentent, sur deux côtés sensiblement diamétralement opposés, des plats (14) le long de chacun desquels repose une tôle, formant lèvre (18), partant d'une bordure latérale constituée par un décrochement (36) de la surface du segment, de manière à servir de recouvrement à un bord longitudinal de la tôle.

10. Aiguille de tirage selon la revendication 1, caractérisé en ce que les segments mobiles les uns par rapport aux autres sont constitués par un ressort hélicoïdal (40).
